# EUROPEAN PATENT SPECIFICATION

(11) **EP 3 161 236 B1**
(45) Date of publication and mention of the grant of the patent: **30.01.2019**
(21) Application number: 15760524.7
(22) Date of filing: 25.06.2015
(51) Int. Cl.: E05F 1/00, E05F 5/00, E05F 15/60, B60J 5/06, E05C 17/60, E05D 15/06

(54) **A SLIDING DOOR SYSTEM**
SCHIEBETÜRSYSTEM
SYSTÈME DE PORTE COULISSANTE

(30) Priority: 27.06.2014 TR 201407554
(43) Date of publication of application: 03.05.2017
(73) Proprietor: Tofas Turk Otomobil Fabrikasi Anonim Sirketi, Bursa (TR)
(72) Inventor: POLAT, Sabri Erkan, 16369 Bursa (TR); OZTURK, Ozgur, 16369 Bursa (TR); HARA, Deniz, 16369 Bursa (TR)
(74) Representative: Dericioglu Kurt, Ekin
(86) International application number: PCT/TR2015/000262
(87) International publication number: WO 2015/199632

(56) References cited:
- EP-A1- 2 423 021
- DE-U1-202006 012 387
- KR-A- 20080 004 979

## Description

### Field of the Invention

The present invention relates to a system which enables to decrease opening and closing force of the side sliding doors in vehicle via electromagnet.

### Background of the Invention

There are side sliding doors in several models of especially commercial vehicles. Opening and closing of these doors can be by means of central electric system, as well as it can be realized by the person sitting on the back seat pulling the opening handle on the door handle or pushing the button, and then pushing or pulling the door. When it is wanted to close/open the door, the door is released from the slot and it is opened/closed by sliding upon the opening handle is pulled or the button is pushed. In systems where the door is opened by pulling the door handle, large pulling-repelling force originated from the weight of the door is required. The said force which is required to be provided by the user increases more in case the vehicle is on an inclined road. The users have difficulty in providing this pulling-repelling force.

German Patent Document no DE102006040070A1, an application known in the state of the art, discloses an eddy current brake system which damps the movement of the sliding door in a vehicle with sliding door. There are permanent magnet and electrically conductive member which are adapted to move relatively enabling to realize the eddy current principle. Eddy current brake system is provided on sliding rails of the vehicle. The invention has a brake system enabling the sliding doors to be closed slowly, however there is no application for decreasing the force used for pulling the sliding door.

German Utility Model no DE202006012387U1, an application known in the state of the art, discloses an electromagnetic coil and a permanent magnet on the body and/or rear door of a passenger vehicle. There is a distance measuring system or switch system between the door and the body. The permanent magnetic force is neutralized more or less according to the distance measured by this sensor during closing the door. In this invention which discloses a sliding door brake system, there is no application for decreasing the force exerted by the user for pulling the sliding door. Electronic control card and sensors which have more frequent failure possibilities and can make wrong measurement in bad weather conditions are used.
European patent no EP2423021, an application known in the state of the art, discloses an electronic lock which enables the sliding door on the vehicles.

In comparison with the previous technique, the invention enables to decrease the energy exerted by the user while directing the sliding door by means of providing a first pushing force. In addition to this, the invention comprises a simple electric circuit comprising two serially connected switches which are directly connected to the position of the door and pull or not pull the door handle, a relay, an electromagnet, and a permanent magnet; it enables this without requiring any control card, control circuit or electronic member. The present invention which does not affected by the difficult air conditions also eliminates the requirement for active or passive hook system used for enabling the door to remain in fully open position in vehicles. For this reason, it is simpler relative to other applications, and it is low cost.

### Summary of the Invention

The objective of the present invention is to enable to decrease human force required for opening and closing the side sliding doors used generally in vehicles with the help of an electromagnet and permanent magnet.

Such objective is achieved by a sliding door system according to claim 1.

### Detailed Description of the Invention

A sliding door system developed to fulfill the objective of the present invention is illustrated by an embodiment of the invention in the accompanying figures, in which:

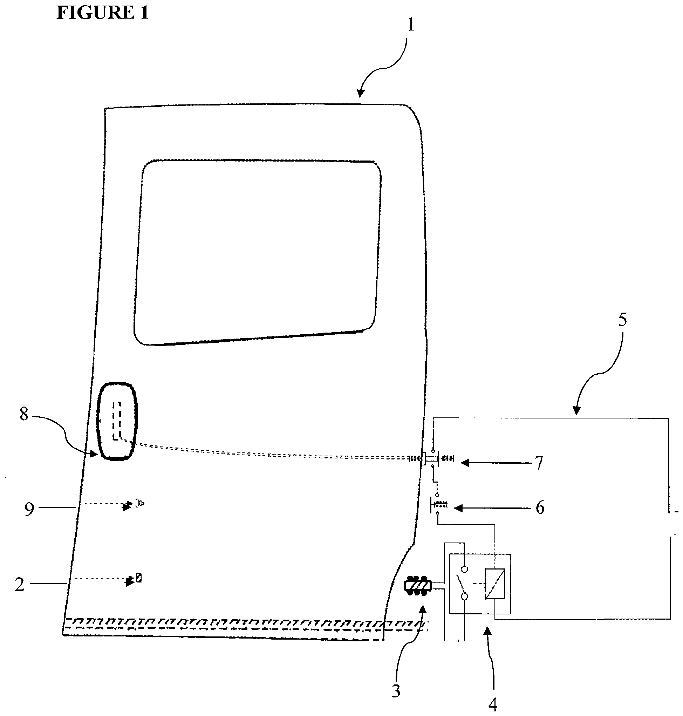

Figure 1 is the schematic view of the sliding door system.
Figure 2 is the schematic view of the system when the sliding door is fully open and the door handle is not pulled by the user.
Figure 3 is the schematic view of the system when the sliding door is in fully open position at the moment when the door handle is pulled by the user and the closing movement starts by applying first pushing force.
Figure 4 is the schematic view of the system when the door handle is not pulled by the user and the sliding door is in a position which is not fully open.
The components shown in the figures are each given reference numbers as follows:
**1.** Sliding door
**2.** Permanent magnet
**3.** Electromagnet
**4.** Relay
**5.** Power supply
**6.** Primary switch
**7.** Secondary switch
**8.** Door handle
**9.** Protrusion

The inventive system enables the power exerted by the user to be reduced when an open sliding door (1) is wanted to be closed by the user. A permanent magnet (2) is placed on surface of the sliding door (1) which is in opening direction of the structure moving on the slide rail, and an electromagnet (3) is placed on the vehicle such that it will be right in front of the permanent magnet (2) when the sliding door (1) is in fully open position. When a current is supplied to a relay (4) enabling the electromagnet (3) to be operated from a power supply (5), the electromagnet (3) and the permanent magnet (2) repel each other when they are adjusted to be on the same pole. The said power supply (5) can be an independent power supply (5) which is used only for the inventive system, as well as it can also be a power supply (5) which can receive its power form the battery. There also two switches in the circuit comprised of electromagnet (3), relay (4) and the power supply (5). The primary switch (6) can be opened and closed depending on the position of the sliding door (1). When the sliding door (1) comes to the fully open position, by means of a protrusion (9) which is provided on the surface of the sliding door (1) facing inside the vehicle and aligned with the primary switch (6) in horizontal position, the primary switch (6) which is open is pushed to be closed mechanically, and the primary switch (6) is enabled to be closed and thus current to pass through the circuit. In all positions of the sliding door (1) apart from fully open position, the primary switch (6) which is closed is pushed to be opened with the help of a flexible piece behind the switch, and the primary switch (6) is enabled to be opened and thus the current not to pass through the circuit. The secondary switch (7) can be opened and closed depending on the door handle (8) to be pulled or not. The secondary switch (7) is in closed position and allows the current passing through it as long as the door handle (8) is pulled by a user. When the door handle (8) is released, he secondary switch (7) is in open position and does not allow the current passing through it when the door handle (8) is not pulled by a user.

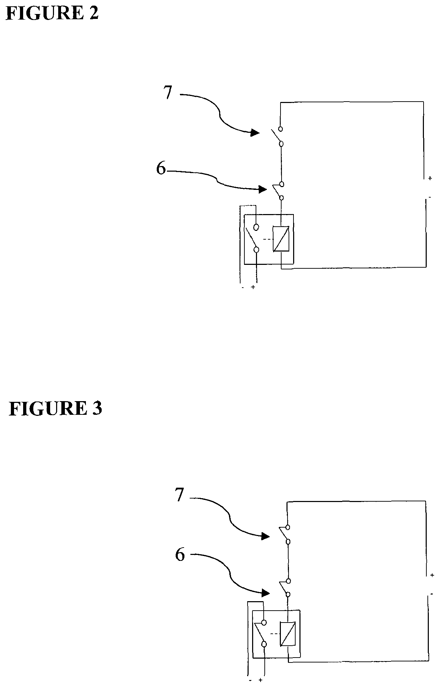

When the door is in fully open position, the primary switch (6) is in closed position and allows the current passing through it. However, the secondary switch (7) is in open position and does not allow the current passing through it. Since the current will not pass through the electric circuit because of the open secondary switch (7), the permanent magnet (2) on the door will pull the core of the electromagnet (3) (Figure 2). In this case, the sliding door (1) which is held by being pulled by the permanent magnet (2) in fully open position is enabled to be remain in open position safely.

When the door handle (8) is pulled by the user, the secondary switch (7) passes to closed position and thus the circuit is completed. The power current is passed through the electromagnet (3) by means of the relay (4), and the electromagnet (3) is operated (Figure 3). Upon the operating electromagnet (3) pushes the permanent magnet (2) on the sliding door (1), the sliding door (1) starts to move in closing direction. With the help of this first pushing force which is provided, the force to be exerted by the user who wants to close the sliding door (1) by pulling the door handle (8) is reduced.

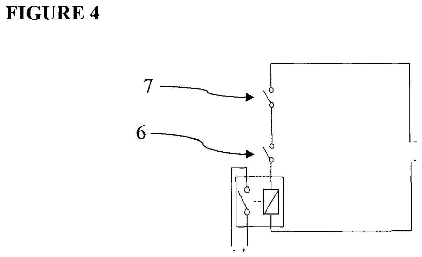

When the sliding door (1) starts to move after the door handle (8) is pulled, the primary switch (6) comes to the open position and the current is cut since the sliding door (1) leaves fully open position (Figure 4).

In the same system, when the closed sliding door (1) is wanted to be opened, the door handle (8) is pulled and the secondary switch (7) comes to closed position. However, since the primary switch (6) will be open until the sliding door (1) fits into its place, the circuit is not completed and the current does not pass. The permanent magnet (2) pulls the core of the electromagnet (3) while the sliding door (1) is becoming close to its fully open position. By this means, the sliding door (1) is enabled to remain in fully open position safely.

In a preferred embodiment of the invention, a delay member can be added to the system in case the user still pulls the door handle (8) although they bring the sliding door (1) to fully open position. The user opens the door by pulling the door handle (8) when the sliding door (1) is in closed position. If the user continues to pull the door handle (8) after bringing the sliding door (1) to fully open position by pulling the door handle (8), both switches will come to closed position, and thus the sliding door (1) will be pushed in closing direction by the electromagnet (3). In this case, the sliding door (1) cannot be brought to desired fully open position. In order to eliminate this unwanted situation, a delay circuit which is adapted to hold any one of the switches in open state for a predetermined short time is added when the sliding door (1) is brought to fully open position. In another preferred embodiment of the invention, for the same purpose there is a sensor which is adapted to detect that the sliding door (1) is brought to open position from the closed position and the user keeps pulling the door handle.

The system which enables to decrease the force required for closing the sliding door (1) can also be used for decreasing the force required for opening the sliding door (1) in the same way. The inventive sliding door system is not limited to be used in doors of vehicles; it can also be used in all systems such as sliding doors and windows.

## Claims

1. A sliding door system, which enables to reduce human force required to open and close the sliding doors in the vehicles, **comprising**
- at least one sliding door (1) which enables access inside and outside the vehicle, and for each sliding door:
- one permanent magnet (2) which enables to give pushing and pulling force to the sliding door (1),
- one door handle (8) which enables the sliding door (1) to be opened and closed by the user,
- one electromagnet (3) which corresponds to the permanent magnet (2), enables to give first pushing force in order to close the sliding door (1) by pushing the permanent magnet, and allows the door remaining fixed in fully open position safely upon its core is pulled by the permanent magnet (2),
one electric circuit comprising:
- one relay (4) which enables the electromagnet (3) to be operated,
- one power supply (5) which is connected to the relay (4),
- one primary switch (6) which can be opened and closed according to the position of the sliding door (1),
- one secondary switch (7) which can be opened and closed depending on the door handle (8) being pulled or not,
whereby the first and secondary switch are serially connected;
- whereby the door handle (8) enables the sliding door (1) to be opened and closed by the user, and allows the current passing through the secondary switch (7) by being closed when it is pulled; wherein the sliding door system further comprises for each sliding door:
- a protrusion (9) which is provided on the side part of the sliding door (1), which enables the primary switch (6) to be closed by pushing the open primary switch (6) to mechanically close, and thus enables current to pass through the electric circuit.

2. A sliding door system according to claim 1, **characterized in that** the primary switch (6) is in closed position when the sliding door (1) is in fully open position and allows current passing through it.

3. A sliding door system according to claim 1 or 2, **characterized in that** the primary switch (6) is in open in all positions of the sliding door (1) except when the door is in fully open position and does not allow current passing through it.

4. A sliding door system according to claim 1, **characterized in that** the secondary switch (7) is in closed position as long as the door handle (8) is pulled by a user and allows the current passing through it.

5. A sliding door system according to claim 1, **characterized in that** the secondary switch (7) is in open position when the door handle (8) is not pulled by a user while it is released, and does not allow current passing through it.

6. A sliding door system according to claim 1, **characterized in that** it comprises at least one delay circuit which is adapted to hold any one of the switches in open state for a predetermined short time in case the door handle (8) is still being pulled although the sliding door (1) is brought to fully open position.

7. A sliding door system according to claim 1, **characterized in that** it comprises at least one sensor which is adapted to detect that the sliding door (1) is brought to open position from the closed position and the user keeps pulling the door handle in case the door handle (8) is still being pulled although the sliding door (1) is brought to fully open position.

## Patentansprüche

1. Schiebetürsystem, das es ermöglicht, die zum Öffnen und Schließen der Schiebetüren in den Fahrzeugen erforderliche menschliche Kraft zu reduzieren, **umfassend**
- mindestens eine Schiebetür (1), die den Zugang innerhalb und außerhalb des Fahrzeugs und für jede Schiebetür ermöglicht:
- einen Permanentmagneten (2), der es ermöglicht, Druck auszuüben und Zugkraft an der Schiebetür (1),
- einen Türgriff (8), der das Öffnen und Schließen der Schiebetür (1) durch den Benutzer ermöglicht,
- ein Elektromagnet (3), der dem Permanentmagneten (2) entspricht, ermöglicht es, eine erste Schubkraft auszuüben, um die Schiebetür (1) durch Drücken des Permanentmagneten zu schließen, und ermöglicht es, dass die Tür in vollständig geöffneter Position sicher auf ihrem Kern befestigt bleibt und vom Permanentmagneten (2) gezogen wird,
eine elektrische Schaltung, die umfasst:
- ein Relais (4), das die Betätigung des Elektromagneten (3) ermöglicht,
- eine Stromversorgung (5), die mit dem Relais (4) verbunden ist,
- einen Primärschalter (6), der entsprechend der Position der Schiebetür (1) geöffnet und geschlossen werden kann,
- einen Sekundärschalter (7), der abhängig davon, ob der Türgriff (8) gezogen wird oder nicht, geöffnet und geschlossen werden kann,
worin der erste und der Sekundärschalter in Reihe geschaltet sind;
wodurch
der Türgriff (8) das Öffnen und Schließen der Schiebetür (1) durch den Benutzer ermöglicht und den Strom durch den Sekundärschalter (7) hindurchlässt, indem er geschlossen wird, wenn er gezogen wird; wobei das Schiebetürsystem ferner für jede Schiebetür Folgendes umfasst:
- einen Vorsprung (9), der am Seitenteil der Schiebetür (1) vorgesehen ist, der das Schließen des Primärschalters (6) durch Drücken des offenen Primärschalters (6) zum mechanischen Schließen ermöglicht und somit den Stromfluss durch die elektrische Schaltung ermöglicht.

2. Schiebetürsystem nach Anspruch 1, **dadurch gekennzeichnet, dass** sich der Primärschalter (6) in geschlossener Position befindet, wenn sich die Schiebetür (1) in vollständig geöffneter Position befindet und Strom durch sie fließen lässt.

3. Schiebetürsystem nach Anspruch 1 oder 2, **dadurch gekennzeichnet, dass** der Primärschalter (6) in allen Positionen der Schiebetür (1) offen ist, außer wenn sich die Tür in der vollständig geöffneten Position befindet und keinen Strom durchlässt.

4. Schiebetürsystem nach Anspruch 1, **dadurch gekennzeichnet, dass** sich der Sekundärschalter (7) in Schließstellung befindet, solange der Türgriff (8) von einem Benutzer gezogen wird und den Strom durchlässt.

5. Schiebetürsystem nach Anspruch 1, **dadurch gekennzeichnet, dass** sich der Sekundärschalter (7) in geöffneter Position befindet, wenn der Türgriff (8) nicht von einem Benutzer gezogen wird, während er freigegeben wird, und keinen Strom durch ihn fließen lässt.

6. Schiebetürsystem nach Anspruch 1, **dadurch gekennzeichnet, dass** es mindestens eine Verzögerungsschaltung umfasst, die geeignet ist, einen der Schalter für eine vorbestimmte kurze Zeit im geöffneten Zustand zu halten, falls der Türgriff (8) noch gezogen wird, obwohl die Schiebetür (1) in die vollständige Öffnungsposition gebracht wird.

7. Schiebetürsystem nach Anspruch 1, **dadurch gekennzeichnet, dass** es mindestens einen Sensor umfasst, der angepasst ist, um zu erfassen, dass die Schiebetür (1) aus der geschlossenen Position in die Öffnungsposition gebracht wird und der Benutzer den Türgriff weiter zieht, falls der Türgriff (8) noch gezogen wird, obwohl die Schiebetür (1) in die vollständig geöffnete Position gebracht wird.

## Revendications

1. Système de porte coulissante, qui permet de réduire la force humaine nécessaire pour ouvrir et fermer les portes coulissantes dans les véhicules, **comprenant**
- au moins une porte coulissante (1) permettant l'accès à l'intérieur et à l'extérieur du véhicule et pour chaque porte coulissante:
- un aimant permanent (2) qui permet de donner une force de poussée et de traction à la porte coulissante (1),
- une poignée de porte (8) qui permet à l'utilisateur d'ouvrir et de fermer la porte coulissante (1),
- un électroaimant (3) qui correspond à l'aimant permanent (2), permet de donner une première force de poussée pour fermer la porte coulissante (1) en poussant l'aimant permanent, et permet à la porte de rester fixée en position complètement ouverte en toute sécurité sur son noyau est tiré par l'aimant permanent (2),
un circuit électrique comprenant:
- un relais (4) qui permet le fonctionnement de l'électroaimant (3),
- une alimentation (5) qui est raccordée au relais (4),
- un interrupteur primaire (6) qui peut être ouvert et fermé en fonction de la position de la porte coulissante (1),
- un interrupteur secondaire (7) qui peut être ouvert et fermé en fonction de la poignée de porte (8) tirée ou non, le premier et le deuxième interrupteur étant connectés en série;
par lequel la poignée de porte (8) permet à l'utilisateur d'ouvrir et de fermer la porte coulissante (1) et permet de fermer le courant traversant l'interrupteur secondaire (7) en le tirant; dans lequel le système de porte coulissante comprend en outre pour chaque porte coulissante:
- une saillie (9) qui est prévue sur la partie latérale de la porte coulissante (1), qui permet de fermer l'interrupteur primaire (6) en poussant l'interrupteur primaire (6) ouvert à fermeture mécanique, et permet ainsi le passage du courant dans le circuit électrique.

2. Système de porte coulissante selon la revendication 1, **caractérisé en ce que** l'interrupteur primaire (6) est en position fermée lorsque la porte coulissante (1) est en position complètement ouverte et laisse passer le courant.

3. Système de porte coulissante selon la revendication 1 ou 2, **caractérisé en ce que** l'interrupteur primaire (6) est en position ouverte dans toutes les positions de la porte coulissante (1) sauf lorsque la porte est en position complètement ouverte et ne permet pas au courant de la traverser.

4. Système de porte coulissante selon la revendication 1, **caractérisé en ce que** l'interrupteur secondaire (7) est en position fermée tant que la poignée de porte (8) est tirée par un utilisateur et laisse passer le courant.

5. Système de porte coulissante selon la revendication 1, **caractérisé en ce que** l'interrupteur secondaire (7) est en position ouverte lorsque la poignée de porte (8) n'est pas tirée par un utilisateur lorsqu'elle est relâchée, et ne permet pas au courant de la traverser.

6. Système de porte coulissante selon la revendication 1, **caractérisé en ce qu'**il comprend au moins un circuit de temporisation qui est adapté pour maintenir l'un quelconque des interrupteurs à l'état ouvert pendant une courte durée prédéterminée dans le cas où la poignée de porte (8) est encore tirée bien que la porte coulissante (1) soit amenée en position complètement ouverte.

7. Système de porte coulissante selon la revendication 1, **caractérisé en ce qu'**il comprend au moins un capteur qui est adapté pour détecter que la porte coulissante (1) est amenée en position ouverte à partir de la position fermée et que l'utilisateur continue à tirer la poignée de porte au cas où la poignée de porte (8) est encore tirée bien que la porte coulissante (1) soit amenée en position complètement ouverte.
